# EUROPEAN PATENT SPECIFICATION

(11) **EP 3 768 090 B1**
(45) Date of publication and mention of the grant of the patent: **09.10.2024**
(21) Application number: 19721045.3
(22) Date of filing: 20.03.2019
(51) Int. Cl.: A23B 7/055, A23B 7/04, A23L 19/00, F25D 3/10

(54) **METHOD AND DEVICE FOR THE PRODUCTION OF SEPARATE PORTIONS OF MASHED FRUIT AND/OR VEGETABLES**
VERFAHREN UND VORRICHTUNG ZUR HERSTELLUNG VON GETRENNTEN PORTIONEN AUS PÜRIERTEM OBST UND/ODER GEMÜSE
PROCÉDÉ ET DISPOSITIF DE PRODUCTION DE PORTIONS SÉPARÉES DE FRUITS ET/OU DE LÉGUMES EN PURÉE

(30) Priority: 21.03.2018 BE 201805191
(43) Date of publication of application: 27.01.2021
(73) Proprietor: Crop's Fruit, 8710 Ooigem (BE)
(72) Inventor: PRAET, Bart, 8710 Ooigem (BE); DELBAERE, Pieter, Ooigem 8710 (BE)
(74) Representative: Brantsandpatents bv
(86) International application number: PCT/IB2019/052253
(87) International publication number: WO 2019/180632

(56) References cited:
- EP-A1- 0 343 138
- EP-A1- 1 920 664
- EP-A2- 0 250 381
- EP-B1- 0 343 138
- WO-A1-2006/087461
- GB-A- 1 016 574
- US-A- 3 315 619
- US-A- 4 022 600

## Description

### TECHNICAL DOMAIN

The invention relates to a method and a device for the production of separate portions of mashed fruit and/or vegetables and/or a combination with other products.

### STATE OF THE ART

Methods and devices for the production of separate portions of mashed fruit and/or vegetables are well-known in the state of the art.

Thus, EP 0981279 A1 describes a process for the preparation of portions of a frozen food, comprising the steps: i) partially freezing of a food for obtaining a mouldable consistency in a thread-scraped surface heat exchanger; ii) distributing the food in portions; and iii) freezing portions of the food. According to EP 0981279 A1, the food can be a vegetable or a sauce comprising pieces of vegetables/meat/fish/poultry/paste.

EP 0981279 A1 describes the problem that a thread-scraped surface heat exchanger is very large and consequently takes a lot of place in a space where food is being processed. This can cause problems if only a limited space is available for food processing. Also, the transport of food according to such a thread causes a rather limited mixture of the food, which can lead to varying and suboptimal results when freezing the food and when distributing the food in portions. Moreover, the process according to EP 0981279 A1 is not suitable for the processing of fruit in itself, since fruit contains a lot of water and sugar and consequently needs a large amount of cold for freezing.

EP 0250381 A2 describes a process for freezing liquid or semiliquid food products in the form of essentially uniform pellets.

EP0343138A1 describes a pelletiser for making pellets from a liquid or semiliquid food product has two moulding rolls between which the food product is formed into pellets.

US4022600A describes an apparatus for freezing boiled rice has an internally bladed drum rotated at low speed and housing a bladed shaft rotated at a higher speed, the drum having covers at its inlet and outlet ends.

The present invention aims to find at least a solution for some of the above-mentioned problems.

### SUMMARY OF THE INVENTION

In a first aspect, the present invention relates to a method for the production of separate portions of mashed fruit and/or vegetables, optionally provided with pieces of fruit and/or vegetables, according to claim 1.

The measure for cooling the mash by means of a liquid coolant when moving the mash causes the formation of small crystals that are spread in a homogeneous way throughout the mash. Thanks to this approach, the mashed fruit and/or vegetables can be cooled to far below its freezing point into a frozen mash with a mouldable consistency. A mouldable consistency at temperatures far below the freezing point of the mash facilitates the portioning of the mash and moreover opposes the thawing of the mash during the portioning thereof or during any further processing steps.

Preferred embodiments of the method are illustrated in claims 2 to 9.

In a second aspect, the present invention relates to a device for the production of separate portions of mashed fruit and/or vegetables, optionally provided with pieces of fruit and/or vegetables, according to claim 10.

Preferred embodiments of the device are illustrated in claims 11 to 13.

In a third aspect, the invention relates to the use of a device according to the second aspect of the present invention in a method according to the first aspect of the present invention, according to claim 14.

In a fourth aspect, the invention relates to a use of a method according to the first aspect of the present invention for the production of separate portions of mashed fruit and/or vegetables optionally provided with pieces of fruit and/or vegetables and comprising one or more types of fruit selected from the group comprising pineapple, raspberry, strawberry, mango and passion fruit, according to claim 15.

### DESCRIPTION

The citation of numeric intervals by means of end points includes all integers, fractions and/or real numbers between the end points, including these end points.

The term "mashed fruit and/or vegetables", as used throughout the text, should be understood as one or more types of fruit or vegetables that are ground, pressed, blended, mixed and/or sieved to the consistency of a soft creamy paste or thick liquid. For the preparation of mashed fruit and/or vegetables, heating can be applied or not. The mashed fruit and/or vegetables can comprise skin fragments or seeds or not. Preferably, mashed fruit and/or vegetables comprise less than 10 percent in weight and more preferably less than 5 percent in weight of particles with a diameter of 5 mm or more, and still more preferably mashed fruit and/or vegetables comprise less than 10 percent in weight and more preferably less than 5 percent in weight of particles with a diameter of 3 mm or more. Any known types of fruit or vegetable can be used for preparing mashed fruit and/or vegetables according to the present invention. Nonlimiting examples of suitable types of fruit or vegetables are pineapple, lemon, orange, peach, pear, grape, mango, apple, tomato, banana, plums, blueberries, raspberries, strawberries, blackberries, cherries, carrot vegetables such as carrot, celery, red beet, radish and horseradish, leaf and flower vegetables such as spinach, leaf spinach, cabbage, red cabbage and cauliflower, peas, and garlic, beans, tomato, sweet pepper, cucumber and pumpkin. Optionally, the mashed fruit and/or vegetables are provided with pieces of fruit and/or vegetables that can be the result of partially grounding, pressing, blending and/or mixing one or more types of fruit and/or vegetables, of which pieces of fruit and/or vegetables have been added afterwards. Optionally, the mashed fruit and/or vegetables are provided with further additions as well-known in the food industry, such as, but not limited to, sugar.

The term "pieces of fruit and/or vegetables", as used throughout the text, can be understood as pieces of any type of fruit or vegetables with a largest dimension of at least 3 mm and preferably with a largest dimension of at least 5 mm.

The term "mouldable consistency", as used throughout the text, can be understood as a consistency of the mashed fruit and/or vegetables wherein the mash has a temperature under its freezing point, for being distributed in portions, by means of punches using a mould, by means of extrusion or any other known moulding techniques. By distributing the mash into portions at a temperature below its freezing point, one obtains portions with a consistent shape that do not disintegrate when maintaining sufficiently low temperatures.

Since, at a temperature below its freezing point, the consistency of mashed fruit and/or vegetables relates to the number of crystals or ice crystals that are present, an suitable consistency for mouldability can be measured by means of a cone penetrometer. Cone penetrometers measure the distance that a cone, that is subject to gravity, penetrates within a controlled time period into an object.

As measured with a cone penetrometer, at a temperature below its freezing point, mashed fruit and/or vegetables preferably have a consistency wherein a cone can penetrate it at a distance of 5 to 34 mm; the penetration distances that are most preferred within this range, will depend on the mash that is being processed.

A desired consistency for mouldability can also be measured by means of a strucktograph. Strucktograph devices measure the resistance force of an object by pushing the object against a cone with springing supports.

As measured with a strucktograph, at a temperature below its freezing point, mashed fruit and/or vegetables preferably have a resistance force of 0.1 to 4.5 N and more preferably a resistance force of 0.3 to 2.5 N. The resistance forces that are most preferred within this range, will depend on the mash that is being processed.

The term "liquid nitrogen", as used throughout the text, can be understood as a liquid with a nitrogen content of at least 85 molar percent and more preferably of at least 99 molar percent and preferably with an oxygen concentration of less than 10 ppm.

The term "liquid carbon dioxide", as used in this text, can be understood as carbon dioxide in its liquid state. Such liquid carbon dioxide is generally available as a compressed gas.

The term "rpm", as used in this text, is in its usual meaning used as an abbreviation for rotations per minute (rpm).

In a first aspect, the invention relates to a method for producing separate portions of mashed fruit and/or vegetables optionally provided with pieces of fruit and/or vegetables, wherein said mash is cooled to a mouldable consistency and subsequently portioned, which portions are subsequently further cooled to frozen portions, wherein the cooling of the mash is realized by means of a liquid coolant when moving the mash.

The measure for cooling the mash by means of a liquid coolant when moving the mash causes the formation of small crystals that are spread in a homogeneous way throughout the mash. Thanks to this approach, the mashed fruit and/or vegetables can be cooled to far below its freezing point into a frozen mash with a mouldable consistency. A mouldable consistency at temperatures far below the freezing point of the mash facilitates the portioning of the mash and moreover opposes the thawing of the mash during the portioning thereof or during any further processing steps. Such measure is certainly not obvious for a skilled worker in the state of the art, as such skilled worker would rather opt for only improving the technique of the portioning or for further cooling down the mash in the absence of sufficient movement of the mash, which however leads to suboptimal results when portioning a frozen mash.

The above-mentioned measure of cooling the mash is moreover advantageous because of the reason of space saving with respect to the state of the art. As such, cooling mashed vegetables according to long cooled bands is known in the state of the art. Especially for mashed fruit, wherein additional cold energy for cooling is required because of a high water content and presence of sugars lowering the freezing point, a very long configuration of such cooled bands is required. The measure of cooling the mash according to the first aspect of the present invention clearly requires less space.

According to a preferred embodiment, when cooling the mash, a liquid coolant is added directly to the mash. This enhances the cooling of significant amounts of mashed fruit and/or vegetables until below the freezing point of the mash, wherein at the same time, it is avoided that very large cooling devices have to be used, such as for example cooled bands. As said above, this is certainly important for mashed fruit, wherein additional cold energy for cooling is required because of a high water content and the presence of sugars lowering the freezing point.

According to a preferred embodiment, the direct addition of the liquid coolant to the mash is realized gradually. Said gradual addition can be programmed in the form of one or more programs. The gradual addition of the liquid coolant can be desired for optimizing the formation of crystals when cooling. The gradual addition can in particular be realized for avoiding the formation of crystals with a too large crystal size in the mash.

According to a preferred embodiment, the liquid coolant is selected from the group comprising liquid nitrogen and liquid carbon dioxide or a combination thereof. The use of a liquid coolant for cooling, also known as cryogenic freezing, has the advantage of a very fast cooling and a low degree of dehydration. Preferably, liquid nitrogen is selected as a liquid coolant. One of the advantages of liquid nitrogen with respect to liquid carbon dioxide is the characteristic that liquid nitrogen is inert, while liquid carbon dioxide is slightly reactive and slightly toxic.

According to a preferred embodiment, of the total amount of added cold energy for cooling the mash, 45 to 85%, more preferably 50 to 80% and more preferably 55 to 75% is added when cooling the mash to a mouldable consistency and the remaining 15 to 55%, more preferably the remaining 20 to 50% and still more preferably the remaining 25 to 45% is added after the portioning of the mash into portions. This distribution of addition of cold energy in two steps is ideally suitable for first obtaining a frozen mash that is still sufficiently mouldable, after which, after the portioning of this mash, the obtained portions can still be further cooled because of shelf life considerations.

According to a preferred embodiment, after cooling to a mouldable consistency, the mash has a temperature of -1°C to -15°C and more preferably of -3°C to -12°C. In combination with the specific way of cooling the mash according to the first aspect of the present invention, a mash with a mouldable consistency can be obtained at these temperatures. These temperatures are clearly lower than the freezing point of mashed fruit and/or vegetables, as a result of which thawing of the mash when portioning is avoided. Moreover, the frozen state of the mash ensures that the formed portions do not disintegrate as long as they are not exposed to temperatures higher than the freezing point of the mashed fruit and/or vegetables.

According to a preferred embodiment, the frozen portions have a temperature of at least -18°C. Such temperature is very desired because of shelf life considerations.

According to the invention, when cooling to a mouldable consistency, the mash is moved in a rotating way while it is brought into a barrel that can rotate around its shaft. Preferably, said barrel rotates around its shaft with a rotational speed of 2 to 25 rpm, more preferably of 3 to 21 rpm and still more preferably of 4 to 17 rpm. The rotating movement of the mash, and preferably at such rotational speed according to said rpm, contributes to the maintenance of the mouldability of the mash while it is cooled to far below its freezing point.

According to the invention, when cooling to a mouldable consistency, the mash is moved by moving one or more blades through the mash. Preferably, the one or more blades are positioned transversely to the coat of a rotational shaft and the rotational shaft rotates when moving the blades according to a rotational speed of 50 to 2000 rpm, more preferably of 100 to 1600 rpm, still more preferably of 120 to 1500 rpm and even still more preferably of 140 to 1400 rpm. According to an embodiment, the one or more blades can be positioned transversely around and uninterruptedly along the coat of the rotational shaft. The movement of the one or more blades according to said rotational speeds causes a movement that is fast enough for quickly spreading the formed crystals in the mash, so that these crystals can be distributed in a homogeneous way in the mash and also cannot combine for the formation of larger crystals. This is very important for obtaining a mash with a mouldable consistency with a temperature far below its freezing point.

According to a preferred embodiment, when cooling to a mouldable consistency, the mash is moved while it is brought into a barrel that can rotate around its shaft and is moved simultaneously by moving one or more blades through the mash. This ensures a combination of the technical effects and advantages for each of the movements, which have been described above.

According to a preferred embodiment, in the vicinity of the blades, the liquid coolant is added directly to the mash. The movement of the blades causes a movement of crystals formed by cooling the mash that has been cooled in the vicinity, so that a homogeneous distribution of the crystals in the mash is enhanced and also a combination of formed crystals for the formation of larger crystals is avoided.

According to a preferred embodiment, the cooling of the mash is realized by means of the liquid coolant when moving the mash and also when reducing the particle size of said mash. The additional measure of reducing the particle size can contribute to the formation of crystals that are as small as possible in the mash when cooling. According to a preferred embodiment, the movement and the reduction of the mash is realized simultaneously. As such, as a result of the simultaneous movement, the spreading of small crystals, that have been formed when simultaneously cooling and reducing the mash, through the mash is enhanced.

According to a preferred embodiment, the reduction of the particle size of the mash is realized by one or more blades that have been cooled by means of the liquid coolant. Preferably, the one or more blades have been cooled by means of liquid nitrogen. By using cooled blades, the mash can simultaneously be reduced and cooled, with the aim to immediately crystallize and spread smaller crystals into the mash by means of the one or more blades. Preferably, said blades are hollow and preferably configured in such way that liquid nitrogen can flow through the blades so that the temperature of the blades is at least -80°C and still more preferably at least -90°C. Such temperatures allow a fast cooling of the mash and moreover offer the advantage that the mash does not adhere to the blades at such low temperatures. This is advantageous for a hygienic reduction of the mash with a minimum of waste.

According to a preferred embodiment, such rotational shaft is made hollow and the liquid coolant is inserted into the rotational shaft. By means of the rotational shaft, with a larger volume than any of the one or more blades attached thereto separately, liquid coolant can simply be provided at the blades. Preferably, said blades are moreover hollow and preferably configured in such way that the liquid coolant can flow through the blades, as said above.

According to a preferred embodiment, the portions are further cooled to frozen portions by moving them through a tunnel cooler. A tunnel cooler is very suitable for being able to cool large amounts of food in a continuous way. Any suitable tunnel cooler as known in the state of the art can be used therefore.

According to a preferred embodiment, the portioning is realized by punching or pressing portions from the mash that has been cooled to a mouldable consistency by means of a mould comprising a plurality of cells. Preferably, said cells are arranged according to a symmetric pattern. By using a mould with a plurality of cells, a plurality of portions can be formed at once, which enhances the continuity of the method according to the first aspect of the present invention. Alternatively, the portioning can be realized by using cryogenic blades as described in EP 0981279 A1.

According to a preferred embodiment, the devices that are used for realizing the method, are cleaned in an automatic way, in between and/or after one or more steps of the method. This is advantageous for the hygiene of the produced separate portions of mashmashed fruit and/or vegetables according to the method of the first aspect of the present invention. Said cleaning in an automatic way is preferably supported by a design and mutual arrangement of parts of the used devices minimizing the accumulation of rests and/or simplifying the cleaning of the devices. All suitable ways of automatic cleaning as known in the state of the art can be used such as, but not limited to, cleaning-in-place (CIP) practices.

In a second aspect, the invention relates to a device for producing separate portions of mashed fruit and/or vegetables optionally provided with pieces of fruit and/or vegetables, comprising a first cooling device suitable for cooling said mash to a mouldable consistency, a forming station suitable for forming portions of said mash and a second cooling device suitable for further cooling said portions to frozen portions, wherein the first cooling device is provided with a first transporting device for moving the mash and an addition device for adding liquid coolant.

The measure of a first cooling device that is provided with a transporting device for moving the mash and an addition device for adding liquid coolant, is optimally suitable for cooling the mash by means of a liquid coolant when moving the mash. Such cooling of the mash by means of the device according to the second aspect of the present invention causes the formation of small crystals that are spread in a homogeneous way throughout the mash. Thanks to this approach, the mashed fruit and/or vegetables can be cooled to far below its freezing point into a frozen mash with a mouldable consistency. A mouldable consistency at temperatures far below the freezing point of the mash facilitates the portioning of the mash and moreover opposes the thawing of the mash during the portioning thereof or during any further processing steps. Such measure is certainly not obvious for a skilled worker in the state of the art, as such skilled worker would rather opt for only improving the formation station or for applying improvements to a cooling device that are only directed to cooling the mash and not to moving the mash, which however leads to suboptimal results when portioning a frozen mash.

The device according to the second aspect of the present invention is moreover advantageous because of the reason of space saving with respect to the state of the art. As such, cooling mashed vegetables according to long cooled bands is known in the state of the art. Especially for mashed fruit, wherein additional cold energy for cooling is required because of a high water content and the presence of sugars lowering the freezing point, a very long configuration of such cooled bands is required. A device according to the second aspect of the present invention takes significantly less space.

According to a preferred embodiment, said addition device at least comprises an outlet for coolant, through which at least one outlet, coolant can be added directly to the mash. By adding coolant directly to the mash via the outlet, the cooling of significant amounts of mashed fruit and/or vegetables until below the freezing point of the mash is enhanced, wherein at the same time, it is avoided that very large cooling devices have to be used, such as for example cooled bands. As said above, this is certainly important for mashed fruit, wherein additional cold energy for cooling is required because of a high water content and the presence of sugars lowering the freezing point.

According to a preferred embodiment, the liquid coolant is selected from the group comprising liquid nitrogen and liquid carbon dioxide or a combination thereof. The use of a liquid coolant for cooling, also known as cryogenic freezing, has the advantage of a very fast cooling and a low degree of dehydration. Preferably, liquid nitrogen is selected as a liquid coolant. One of the advantages of liquid nitrogen with respect to liquid carbon dioxide is the characteristic that liquid nitrogen is inert, while liquid carbon dioxide is slightly reactive and slightly toxic.

According to the invention, the transporting device comprises a rotating barrel that is suitable for being filled with the mash and for moving the mash in a rotating way. The rotating barrel is preferably rotatable around a shaft that is positioned centrally in the barrel. Said barrel takes relatively little space compared to a long conveyor belt and is moreover suitable for comprising large amounts of a mash.

According to the invention, the first cooling device further comprises a second transporting device, the second transporting device comprising one or more blades that are positioned transversely to the surface of a rotating shaft. This is a very efficient way for making the one or more blades rotate at a high speed, by means of exercising a large rotational speed of the rotating shaft, in order to additionally being able to move the mash. The movement of the one or more blades causes an additional spreading of the crystals formed when cooling the mash, so that a homogeneous distribution of these crystals in the mash is enhanced and also a combination of the crystals for the formation of larger crystals is avoided. This is very important for obtaining a mash with a mouldable consistency with a temperature far below its freezing point.

According to a preferred embodiment, said at least one outlet of the addition device for adding liquid coolant is placed in the vicinity of said one or more blades. As a result of the vicinity, the movement of the blades causes a movement of crystals formed by cooling the mash that has been cooled in the vicinity, so that a homogeneous distribution of the crystals in the mash is enhanced and also a combination of formed crystals for the formation of larger crystals is avoided.

According to a preferred embodiment, the one or more blades are positioned essentially transversely to and in the vicinity of said rotating barrel. Such positioning is in particular advantageous for the movement of the mash.

According to a preferred embodiment, the rotating barrel comprises a groove passing along and within its circumference, which groove is dimensioned and positioned in such way for, when rotating the barrel, closely enclosing at least a part of said plane of blades. The provision of the groove and such arrangement of blades in the groove is ideally suitable for offering mash, by rotating the barrel, in an uninterrupted continuous or continuous way for movement of the blades. Such arrangement of two or more of said blades in a plane onto the coat of the rotational shaft can also be called a knife head. In an embodiment, the first cooling device comprises two or more of said knife heads, which are each at least partially enclosed by the groove of the rotating barrel. The use of several knife heads can be desired for optimizing the movement of the mash depending on the desired specifications. Said groove and arrangement of blades in the groove moreover leaves a minimum of rests after processing a mash and is moreover very suitable for application of automatic preparation methods and applications such as CIP devices or practices.

According to a preferred embodiment, the one or more blades are hollow, wherein the blades can have liquid coolant flow through their hollow inside. By cooling blades from the inside, there is no direct contact between the liquid coolant and the mash.

According to a preferred embodiment, the rotational shaft is hollow and suitable for receiving liquid coolant via its hollow inside. By means of the rotational shaft, with a larger volume than any of the one or more blades attached thereto separately, liquid coolant can simply be provided at the blades. Preferably, said blades are moreover hollow and preferably configured in such way that the liquid coolant can flow through the blades, as said above.

According to a preferred embodiment, the formation station comprises a mould, which mould comprises a plurality of cells, which cells are preferably arranged in a symmetric way inside the mould. By applying said mould with force onto the cooled mash with a mouldable consistency, portions can be punched out of the mash. Such way of portioning ensures that several portions can be formed, which is very advantageous for a continuous or semi-continuous production of separate portions of mashed fruit and/or vegetables according to a device according to the second aspect of the present invention. Alternatively, the formation station comprises an extruder that is suitable for portioning the mash that has been cooled to a mouldable consistency. A simple extruder consists of a housing with a turning screw inside. At the beginning of the screw, the draught of the screw channel is large, so that the mash can be transported without too much friction. At about a third of the screw, the screw channel gradually becomes less deep so that the mash experiences much friction with respect to the housing, the screw and especially with respect to itself. Consequently, pressure is built up. Then, a so-called dosing zone follows, where mixing takes place. Finally, the mash is pushed out of one or several mould openings of a mould according to the extruder.

According to a preferred embodiment, a tunnel cooler is selected as a second cooling device. A tunnel cooler is very suitable for being able to cool large amounts of food in a continuous way. Any suitable tunnel cooler as known in the state of the art can be used therefore.

In a third aspect, the invention relates to the use of a device according to the second aspect of the present invention in a method according to the first aspect of the present invention. Accordingly, all technical realizations and positive characteristics of the device according to the second aspect of the present invention are combined with those of the method according to the first aspect of the present invention.

In a fourth aspect, the invention relates to a use of a method according to the first aspect of the present invention for the production of separate portions of mashed fruit and/or vegetables optionally provided with pieces of fruit and/or vegetables and comprising one or more types of fruit selected from the group comprising pineapple, raspberry, strawberry, mango and passion fruit. Because of its cooling of the mash by means of a liquid coolant when moving the mash, the method according to the first aspect of the present invention is very suitable for producing separate portions of a mash comprising one or several of said types of fruit, which types of mashed fruit are normally difficult to portion after cooling because of a low fibre content and a high water and sugar content of said types of fruit, making the cooling and freezing difficult.

### EXAMPLES

### EXAMPLE 1

Example 1 relates to a method and a device for producing formed frozen mashed fruit, according to embodiments of the present invention.

The device according to Example 1 comprises a first cooling device that is suitable for cooling mashed fruit and/or vegetables optionally provided with pieces of fruit and/or vegetables to a mouldable consistency, a formation station that is suitable for forming portions of said mash and a second cooling device that is suitable for further cooling said portions to frozen portions.

The first cooling device according to Example 1 is provided with a barrel that can be rotated around a shaft that is positioned centrally in the barrel for moving the mash and one or more blades positioned transversely and supported by a rotational shaft for moving the mash and an for coolant, which outlet is positioned in the vicinity of said one or more blades.

The rotating barrel is filled with the mash, preferably up to half of the barrel. During and after placing the mash, the barrel rotates with a rotational speed of 12 to 22 rpm while the blades move through rotation of said rotational shaft. At the same time, liquid nitrogen is added directly to the mash via said outlet. This approach is intended for crystallizing and at the same time moving the mash, which movement is optimal thanks to the combination of rotation of the barrel and movement of the blades, in order to form small crystals that are also spread in a homogeneous way in the mass of the mash. Thanks to this approach, the mash is further cooled to far below its freezing point into a frozen mash with a mouldable consistency. A mouldable consistency at temperatures far below the freezing point of the mash facilitates the portioning of the mash and moreover opposes the thawing of the mash during the portioning thereof or during any further processing steps. Preferably, it is cooled in such way that a mash with mouldable consistency is obtained with a temperature between -1°C and -15°C and preferably with a temperature between -3°C and -12°C.

For portioning the thus obtained cooled mash with a mouldable consistency, the mash is transferred to a formation station. The formation station comprises a mould with a plurality of cells. For portioning the mash, the mould is positioned with force onto the mash, as a result of which different portions of the mash are punched. After punching, said portions are collected and further transported by means of a conveyor belt. Subsequently, by moving through a tunnel cooler, the portions are further cooled to frozen portions with a temperature of at least -18°C. Such low temperature is optimally suitable for being able to guarantee the shelf life of the frozen portions for a sufficiently long period.

In the first cooling device, 55 to 75% of the cold energy is added that is necessary for obtaining the finally obtained cooled mash with a mouldable consistency, while the remaining 25 to 45% is added in the tunnel cooler. This distribution of addition of cold energy in two steps is ideally suitable for first obtaining a frozen mash with a mouldable consistency, after which, after the portioning of this mash, the obtained portions can still be further cooled because of shelf life considerations.

### EXAMPLES 2-6

Examples 2-6 give specifications for the production of separate portions of mashed fruit without the addition or provision of pieces of fruit or sugar, according to embodiments of the method of the present invention. The specifications of Examples 2-6 are shown in Table 1.

**Table 1 Specifications of Examples 1-6 for the production of separate portions of mashed fruit without the addition or provision of pieces of fruit or sugar, according to embodiments of the method of the present invention.**

| | Type of mash | Additions to mash | Temperature of mash with a mouldable consistency (°C) | Temperature of frozen portions of the mash (°C) | Rotational speed of one or more blades (rpm) | Rotational speed of barrel (rpm) | |
|---|---|---|---|---|---|---|---|
| Example 2 | pineapple | / | -3 to -5 | -18 to -19 | 1100 to 1300 | 5 to 10 | |
| Example 3 | raspberry | pieces of mango | -8 to -9 | -20 to -21 | 350 to 450 | 5 to 10 | |
| Example 4 | raspberry | 10%* of sugar | -9 to -10 | -21 to -22 | 150 to 250 | 5 to 10 | |
| Example 5 | mango | / | -9 to -10 | -20 to -21 | 950 to 1050 | 10 to 15 | |
| Example 6 | passion fruit | / | -6.5 to -7.5 | -19 to -20 | 750 to 850 | 5 to 10 | |

| | | | | | | | |
|---|---|---|---|---|---|---|---|
| * percentage is calculated with respect to the total weight of the mashed raspberries, sugar included | | | | | | | |

## Claims

1. Method for producing separate portions of mashed fruit and/or vegetables, optionally provided with pieces of fruit and/or vegetables, wherein said mash is cooled to a mouldable consistency and subsequently portioned, which portions are subsequently further cooled to frozen portions, wherein cooling of the mash is realized by means of a liquid coolant and when moving the mash, **characterized in that** when cooling to a mouldable consistency, the mash is moved while it is brought into a barrel that can rotate around its shaft and is moved simultaneously by moving one or more blades through the mash.

2. Method according to claim 1, wherein for cooling the mash, the liquid coolant is added directly to the mash, said direct addition of the liquid coolant to the mash is performed gradually.

3. Method according to any one of the claims 1 to 2, wherein, of the totally added cold energy for cooling the mash, 45 to 85% is added when cooling the mash to a mouldable consistency, and the remaining 15 to 55% is added after the portioning of the mash into portions.

4. Method according to any one of the claims 1 to 3, wherein, after cooling to a mouldable consistency, the mash has a temperature of -1°C to -15°C.

5. Method according to any one of the claims 1 to 4, wherein the frozen portions have a temperature of at least -18°C.

6. Method according to any one of the claims 1 to 5, wherein said rotatable barrel rotates around its shaft with a rotational speed of 2 to 25 rpm.

7. Method according to any one of the claims 1 to 6, wherein said one or more blades are positioned transversely onto the surface of a rotational shaft, and wherein, when moving the blades, the rotational shaft rotates according to a rotational speed of 50 to 2000 rpm.

8. Method according to any one of the claims 1 to 7, wherein, in the vicinity of the blades, the liquid coolant is added directly to the mash.

9. Method according to any one of the claims 1 to 8, wherein the devices that are used for realizing the method, are cleaned in an automatic way, in between and/or after one or more steps of the method.

10. Device for producing separate portions of mashed fruit and/or vegetables optionally provided with pieces of fruit and/or vegetables, comprising a first cooling device suitable for cooling said mash to a mouldable consistency, a forming station suitable for forming portions of said mash and a second cooling device suitable for further cooling said portions to frozen portions, wherein the first cooling device is provided with a first transporting device for moving the mash and an application device for applying liquid coolant, **characterized in that** the first transporting device comprises a rotating barrel that is suitable for being filled with the mash and for moving the mash in a rotating way, that the first cooling device further comprises a second transporting device, the second transporting device comprising one or more blades that are positioned transversely to the surface of a rotating shaft.

11. Device according to claim 10, wherein said application device at least comprises an outlet for coolant, through which at least one outlet, coolant can be added directly to the mash.

12. Device according to any one of the claims 10 to 11, wherein said at least one outlet of the application device for applying said liquid coolant is placed in the vicinity of said one or more blades.

13. Device according to any one of the claims 10 to 12, wherein the rotating barrel comprises a groove passing along and within its circumference, which groove is positioned and dimensioned in such way for, when rotating the barrel, closely enclosing at least a part of said plane of blades.

14. Use of a device according to any one of the claims 10 to 13 in a method according to any one of the claims 1 to 9.

15. Use of a method according to any one of the claims 1 to 9 for the production of separate portions of mashed fruit and/or vegetables optionally provided with pieces of fruit and/or vegetables and comprising one or more types of fruit selected from the group comprising pineapple, raspberry, strawberry, mango and passion fruit.

## Patentansprüche

1. Verfahren zum Produzieren separater Portionen pürierter Früchte und/oder Gemüse, optional mit Frucht- und/oder Gemüsestückchen versehen, wobei das Püree auf eine formbare Konsistenz gekühlt und danach portioniert wird, wobei die Portionen danach weiter zu gefrorenen Portionen gekühlt werden, wobei das Kühlen des Pürees mittels eines flüssigen Kühlmittels umgesetzt wird und wenn das Püree bewegt wird, **dadurch gekennzeichnet, dass** das Püree beim Kühlen auf eine formbare Konsistenz bewegt wird, während es in eine Trommel gebracht wird, sich sich um ihre Welle drehen kann, und gleichzeitig durch Bewegen einer oder mehrerer Schaufeln durch das Püree bewegt wird.

2. Verfahren nach Anspruch 1, wobei das flüssige Kühlmittel zum Kühlen des Pürees dem Püree direkt zugesetzt wird, wobei das direkte Zusetzen des flüssigen Kühlmittels zu dem Püree schrittweise durchgeführt wird.

3. Verfahren nach einem der Ansprüche 1 bis 2, wobei 45 bis 85 % der gesamten zugesetzten Kühlenergie zum Kühlen des Pürees zugesetzt werden, wenn das Püree auf eine formbare Konsistenz gekühlt wird, und die verbleibenden 15 bis 55 % nach dem Portionieren des Pürees in Portionen zugesetzt werden.

4. Verfahren nach einem der Ansprüche 1 bis 3, wobei das Püree nach dem Kühlen auf eine formbare Konsistenz eine Temperatur von -1 °C bis -15 °C aufweist.

5. Verfahren nach einem der Ansprüche 1 bis 4, wobei die gefrorenen Portionen eine Temperatur von mindestens -18 °C aufweisen.

6. Verfahren nach einem der Ansprüche 1 bis 5, wobei sich die drehbare Trommel mit einer Drehzahl von 2 bis 25 U/min um ihre Welle dreht.

7. Verfahren nach einem der Ansprüche 1 bis 6, wobei die eine oder die mehreren Schaufeln quer auf der Oberfläche einer Drehwelle positioniert sind und wobei sich die Drehwelle gemäß einer Drehzahl von 50 bis 2000 U/min dreht, wenn sie die Schaufeln bewegt.

8. Verfahren nach einem der Ansprüche 1 bis 7, wobei das flüssige Kühlmittel dem Püree in der Nähe der Schaufeln direkt zugesetzt wird.

9. Verfahren nach einem der Ansprüche 1 bis 8, wobei die Vorrichtungen, die zum Umsetzen des Verfahrens verwendet werden, in einer automatischen Weise zwischen und/oder nach einem oder mehreren Schritten des Verfahrens gereinigt werden.

10. Vorrichtung zum Produzieren separater Portionen pürierter Früchte und/oder Gemüse, optional mit Frucht- und/oder Gemüsestückchen versehen, eine erste Kühlvorrichtung umfassend, die zum Kühlen des Pürees auf eine formbare Konsistenz geeignet ist, eine Bildungsstation, die zum Bilden von Portionen des Pürees geeignet ist, und eine zweite Kühlvorrichtung, die zum weiteren Kühlen der Portionen zu gefrorenen Portionen geeignet ist, wobei die erste Kühlvorrichtung mit einer ersten Transportvorrichtung zum Bewegen des Pürees und mit einer Zuführungsvorrichtung zum Zuführen eines flüssigen Kühlmittels versehen ist, **dadurch gekennzeichnet, dass** die erste Transportvorrichtung eine sich drehende Trommel umfasst, die dazu geeignet ist, mit dem Püree gefüllt zu werden und das Püree in einer drehenden Weise zu bewegen, dass die erste Kühlvorrichtung ferner eine zweite Transportvorrichtung umfasst, wobei die zweite Transportvorrichtung eine oder mehrere Schaufeln umfasst, die quer zu der Oberfläche einer Drehwelle positioniert sind.

11. Vorrichtung nach Anspruch 10, wobei die Zuführungsvorrichtung mindestens einen Auslass für Kühlmittel umfasst, wobei durch diesen mindestens einen Auslass Kühlmittel dem Püree direkt zugesetzt werden kann.

12. Vorrichtung nach einem der Ansprüche 10 bis 11, wobei der mindestens eine Auslass der Zuführungsvorrichtung zum Zuführen des flüssigen Kühlmittels in der Nähe der einen oder der mehreren Schaufeln platziert ist.

13. Vorrichtung nach einem der Ansprüche 10 bis 12, wobei die sich drehende Trommel eine Rille umfasst, die entlang und in ihrem Umfang verläuft, wobei die Rille derart positioniert und bemessen ist, dass mindestens ein Teil der Ebene der Schaufeln eng umschlossen ist, wenn sich die Trommel dreht.

14. Verwendung einer Vorrichtung nach einem der Ansprüche 10 bis 13 in einem Verfahren nach einem der Ansprüche 1 bis 9.

15. Verwendung eines Verfahrens nach einem der Ansprüche 1 bis 9 für die Produktion separater Portionen pürierter Früchte und/oder Gemüse, optional mit Frucht- und/oder Gemüsestückchen versehen, und eine oder mehrere Arten von Früchten umfassend, die aus der Gruppe ausgewählt sind, die Ananas, Himbeere, Erdbeere, Mango und Passionsfrucht umfasst.

## Revendications

1. Procédé de production de portions séparées de fruits et/ou de légumes en purée, présentant facultativement des morceaux de fruits et/ou de légumes, dans lequel ladite purée est refroidie pour obtenir une consistance permettant un moulage et ensuite mise en portions, lesquelles portions sont ensuite encore refroidies pour obtenir des portions congelées, dans lequel le refroidissement de la purée est réalisé au moyen d'un liquide de refroidissement et lors du déplacement de la purée, **caractérisé en ce que** lors du refroidissement pour obtenir une consistance permettant un moulage, la purée est déplacée tout en étant amenée dans un cylindre qui peut tourner autour de son arbre et est déplacée simultanément en déplaçant une ou plusieurs pales à travers la purée.

2. Procédé selon la revendication 1, dans lequel pour le refroidissement de la purée, le liquide de refroidissement est ajouté directement à la purée, ledit ajout direct du liquide de refroidissement à la purée est effectué prog ressivement.

3. Procédé selon l'une quelconque des revendications 1 à 2, dans lequel, de l'énergie froide totalement ajoutée pour le refroidissement de la purée, 45 à 85 % sont ajoutés lors du refroidissement de la purée pour obtenir une consistance permettant un moulage, et les 15 à 55 % restants sont ajoutés après la mise en portions de la purée.

4. Procédé selon l'une quelconque des revendications 1 à 3, dans lequel, après le refroidissement pour obtenir une consistance permettant un moulage, la purée présente une température de -1 °C à -15 °C.

5. Procédé selon l'une quelconque des revendications 1 à 4, dans lequel les portions congelées présentent une température d'au moins -18 °C.

6. Procédé selon l'une quelconque des revendications 1 à 5, dans lequel ledit cylindre rotatif tourne autour de son arbre à une vitesse de rotation de 2 à 25 tr/min.

7. Procédé selon l'une quelconque des revendications 1 à 6, dans lequel lesdites une ou plusieurs pales sont positionnées transversalement sur la surface d'un arbre rotatif, et dans lequel, lors du déplacement des pales, l'arbre rotatif tourne selon une vitesse de rotation de 50 à 2 000 tr/min.

8. Procédé selon l'une quelconque des revendications 1 à 7, dans lequel, à proximité des pales, le liquide de refroidissement est ajouté directement à la purée.

9. Procédé selon l'une quelconque des revendications 1 à 8, dans lequel les dispositifs qui sont utilisés pour réaliser le procédé, sont nettoyés de manière automatique, entre et/ou après une ou plusieurs étapes du procédé.

10. Dispositif de production de portions séparées de fruits et/ou de légumes en purée présentant facultativement des morceaux de fruits et/ou de légumes, comprenant un premier dispositif de refroidissement approprié pour le refroidissement de ladite purée pour obtenir une consistance permettant un moulage, une station de formation appropriée pour former des portions de ladite purée et un second dispositif de refroidissement approprié pour encore refroidir lesdites portions pour obtenir des portions congelées, dans lequel le premier dispositif de refroidissement présente un premier dispositif de transport pour déplacer la purée et un dispositif d'application pour appliquer un liquide de refroidissement, **caractérisé en ce que** le premier dispositif de transport comprend un cylindre rotatif qui est approprié pour être rempli avec la purée et pour déplacer la purée de manière rotative, **en ce que** le premier dispositif de refroidissement comprend en outre un second dispositif de transport, le second dispositif de transport comprenant une ou plusieurs pales qui sont positionnées transversalement à la surface d'un arbre rotatif.

11. Dispositif selon la revendication 10, dans lequel ledit dispositif d'application comprend au moins une sortie pour un fluide de refroidissement, à travers laquelle au moins un fluide de refroidissement de sortie peut être ajouté directement à la purée.

12. Dispositif selon l'une quelconque des revendications 10 à 11, dans lequel ladite au moins une sortie du dispositif d'application pour appliquer ledit liquide de refroidissement est placée à proximité desdites une ou plusieurs pales.

13. Dispositif selon l'une quelconque des revendications 10 à 12, dans lequel le cylindre rotatif comprend une gorge passant le long de sa circonférence et à l'intérieur de celle-ci, laquelle gorge est positionnée et dimensionnée de manière à, lors de la rotation du cylindre, renfermer étroitement au moins une partie dudit plan de pales.

14. Utilisation d'un dispositif selon l'une quelconque des revendications 10 à 13 dans un procédé selon l'une quelconque des revendications 1 à 9.

15. Utilisation d'un procédé selon l'une quelconque des revendications 1 à 9 pour la production de portions séparées de fruits et/ou de légumes en purée présentant facultativement des morceaux de fruits et/ou de légumes et comprenant un ou plusieurs types de fruits choisis dans le groupe comprenant l'ananas, la framboise, la fraise, la mangue et le fruit de la passion.
